# EUROPÄISCHE PATENTSCHRIFT

(11) **EP 0 972 570 B1**
(45) Veröffentlichungstag und Bekanntmachung des Hinweises auf die Patenterteilung: **23.06.2004**
(21) Anmeldenummer: 98113174.1
(22) Anmeldetag: 15.07.1998
(51) Int. Cl.: B03B 5/28, B03B 9/06, B29B 17/02

(54) **Verfahren und Vorrichtung zur Abtrennung von Wertstoffen aus Stoffgemischen, welche schwimm-und saugfähiges Material und Metalle mit ferromagnetischem Anteil enthalten**
Method and device for separating valuable materials fom mixtures comprising floatable and absorbent materials, and metals with ferromagnetic parts
Procédé et dispositif pour séparer des matières recyclables de mélanges comprenant des matières flottables et absorbantes, et des métaux avec une partie ferromagnétique

(43) Veröffentlichungstag der Anmeldung: 19.01.2000
(73) Patentinhaber: Hewlett-Packard Company, A Delaware Corporation, Palo Alto, CA 94304 (US); BlfA GmbH, 86167 Augsburg (DE)
(72) Erfinder: Wagner, Josef, Dipl.-Ing., 85051 Ingolstadt (DE); Kreibe, Siegfried, Dr., 81245 München (DE); Hartleitner, Bernhard, Dipl.-Ing. (FH), 86415 Mering (DE); Pitschke, Thorsten, Dipl.-Ing., 86465 Welden (DE); Deisser, Xaver, 86678 Ehingen (DE)
(74) Vertreter: Schoppe, Fritz, Dipl.-Ing.

(56) Entgegenhaltungen:
- EP-A- 0 429 031
- DE-A- 3 347 230
- DE-A- 19 521 413
- US-A- 3 777 994
- US-A- 4 981 876

## Beschreibung

Die Erfindung betrifft ein Verfahren zur Abtrennung von Wertstoffen aus Stoffgemischen, welche schwimm- und saugfähiges Material und Metalle mit ferromagnetischem Anteil enthalten, insbesondere aus Tintenpatronen, gemäß Anspruch 1 und eine Vorrichtung zur Durchführung des Verfahrens gemäß Anspruch 8.

Tintenpatronen finden heutzutage in Druckern, Faxgeräten etc. als Einweg-Patronen Verwendung und fallen in großem Umfang als Abfall an, wenn ihr Tintenvorrat aufgebraucht ist. Eine solche Tintenpatrone enthält eine Vielzahl unterschiedlicher Materialien und besteht im wesentlichen aus einem Kunststoff-Gehäuse, einem saugund schwimmfähigen, leicht verformbaren Kunststoff-Schaum innerhalb des Gehäuses, einer Tintendüse und einer Schaltung mit elektrischen Kontakten, wobei an nahezu allen Komponenten noch ein Rest an Tinte haftet, wenn der Tintenvorrat der Tintenpatrone aufgebraucht ist. Das saugfähige schaumartige Material besteht aus Polyurethan oder dergleichen und dient dazu, die Tinte aufzusaugen und innerhalb der Tintenpatrone zu binden, um ein Hin- und Herschwappen der Tinte zu vermeiden, wenn die Tintenpatrone zusammen mit dem Druckkopf innerhalb des Druckers mit hoher Geschwindigkeit bewegt wird. Insbesondere dieser Kunststoff-Schaum bindet selbst bei einer aufgebrauchten Tintenpatrone noch einen relativ hohen Anteil an Resttinte. Das Gehause der Tintenpatrone besteht aus Kunststoff, z.B. aus Polysulfon. Die Tintendüse ist edelmetallhaltig z.B. goldhaltig.

Dieses Edelmetall befindet sich auf einer Nickelschicht. Auch die auf einer Platine aufgedruckte Schaltung zur Steuerung der Tintenpatrone enthält Edelmetall z.B. Gold. Darüber hinaus enthält die Tintenpatrone auch reine Stahlanteile, z.B. in den Gehäusewänden.

Aus der DE-A-3347230, der US-A-3777994 und der EP-A-0429031 sind bereits Verfahren und Vorrichtungen der in den Oberbegriffen der Patentansprüche 1 und 8 aufgeführten Art bekannt.

Hiervon ausgehend ist es die Aufgabe der vorliegenden Erfindung, ein Verfahren und eine Vorrichtung zur Abtrennung von Wertstoffen aus Stoffgemischen bereitzustellen, welche schwimm- und saugfähiges Material, Kunststoffe und Metalle mit ferromagnetischem Anteil enthalten, bei welchen die Abtrennung der Wertstoffe zuverlässig und vollständig erfolgt.

Diese Aufgabe wird gemäß der Erfindung durch ein Verfahren mit den Merkmalen von Anspruch 1 und durch eine Vorrichtung mit den Merkmalen von Anspruch 8 gelöst.

Die Maßnahmen ergeben in vorteilhafter Weise, daß durch die Grobzerkleinerung zunächst mechanische Verbindungen zwischen verschiedenen Materialien, insbesondere zwischen dem schwimm- und saugfähigen Material und dem Rest des Stoffgemischs aufgelöst, und diese Materialien zumindest teilweise freigelegt werden. Da auch das schwimm- und saugfähige Material größtenteils ungebunden freiliegt, kann im Laufe der daran anschließenden Schwimm-Sink-Trennung das schwimmfähige Material, welches eine relativ geringe Dichte aufweist, als Schwimmfraktion abgetrennt werden. Zugleich wird zumindest ein Teil der an der Sinkfraktion haftenden Flüssigkeit durch Eintauchen in die Trennflüssigkeit der Schwimm-Sink-Trenn-Vorrichtung abgewaschen.

Eine besonders vorteilhafte Ausgestaltung kann darin bestehen, daß im Falle einer Aufbereitung von Tintenpatronen durch eine Magnetseparation zusammen mit einer im wesentlichen reinen Stahlfraktion auch eine edelmetallhaltige Stahlfraktion von nicht-ferromagnetischem Material abgetrennt wird. Zur Trennung der reinen Stahlfraktion von der edelmetallhaltigen Stahlfraktion wird das abgetrennte ferromagnetische Material anschließend gesiebt, wobei feinkörnige Partikel die edelmetallhaltige Stahlfraktion und grobkörnige Partikel die edelmetallfreie Stahlfraktion bilden.

Als Vorbehandlung des vorzerkleinerten Materials für die Schwimm-Sink-Trennung wird ein Teil von hieran eventuell anhaftender Flüssigkeit durch eine Vibrations-Siebrinne abgetrennt. Auf diese Weise wird auch saugfähiges Material, welches in hohem Maße mit Flüssigkeit vollgesogen ist, für eine nachfolgende Schwimm-Sink-Trennung mit Wasser als Trennmedium schwimmfähig gemacht. Bei der Verwendung von Wasser als Trennmedium tragen vor allem dessen gute Verfügbarkeit, die einfache Handhabung im Prozess und die geringen Kosten zur Kosteneffizienz des erfindungsgemäßen Verfahrens bei.

Als Wertstoffe, welche durch das erfindungsgemäße Verfahren bzw. durch die erfindungsgemäße Vorrichtung abgetrennt werden, erhält man eine grobzerkleinerte nicht-ferromagnetische Fraktion, grobzerkleinertes schwimm- und saugfähiges Material sowie eine grobzerkleinerte ferromagnetische Fraktion.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand den Zeichnungen näher entnehmbar. In den Zeichnungen zeigen:
- **Fig.1**: eine schematische Darstellung der erfindungsgemäßen Vorrichtung in einer bevorzugten Ausführungsform;
- **Fig.2**: eine schematische Darstellung einer Schwimm-Sink-Trennvorrichtung als Teil der erfindungsgemäßen Vorrichtung.

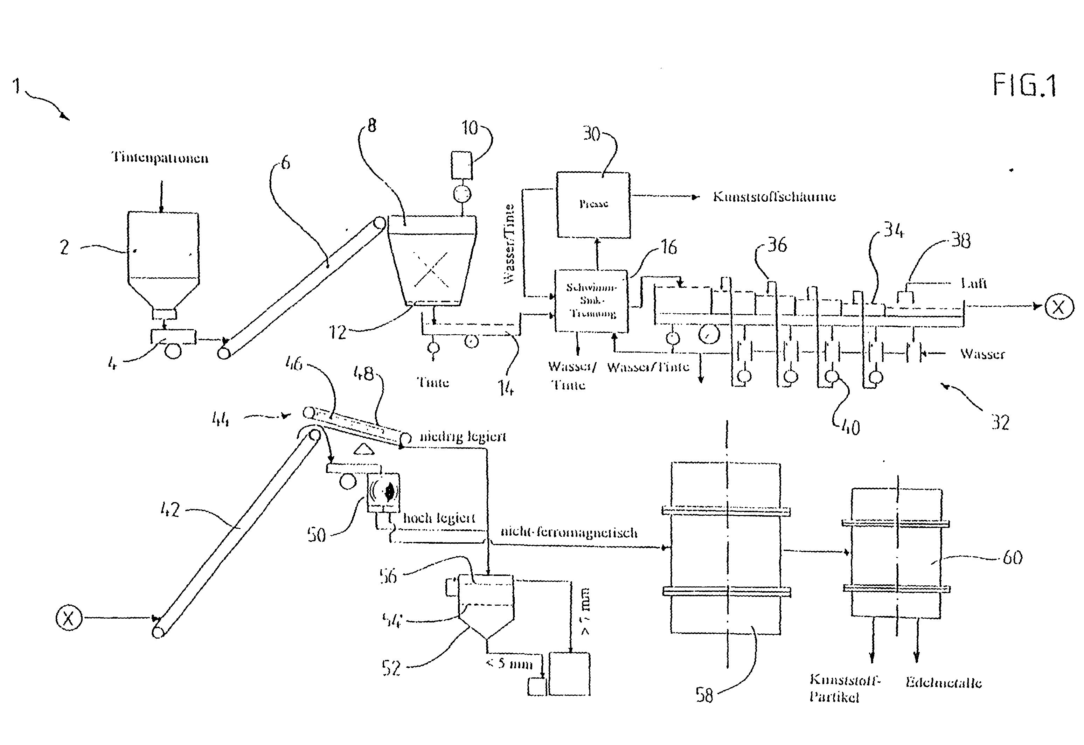

Die in Fig.1 dargestellte Vorrichtung wird vorzugsweise zur Abtrennung von Wertstoffen aus Tintenpatronen 1 eingesetzt. Die Vorrichtung 1 weist einen tricherförmigen Speicherbehälter 2 zum Speichern von gebrauchten und leeren Tintenpatronen auf. Am tricherförmigen Ausgang des Speicherbehälters 2 ist eine Vibrationsfördereinrichtung 4 angeordnet, durch welche die Tintenpatronen über ein Förderband 6 in eine Mühle 8 transportiert werden, welche vorzugsweise eine Einwellen-Mühle ist. In der Mühle 8 werden die Tintenpatronen grobzerkleinert, wobei mittels einer Zuführeinrichtung 10 der Mühle 8 eine Anti-Schaum-Emulsion zugeführt wird, um eine Schaumbildung während des Mahlens zu vermeiden. Die grobzerkleinerten Tintenpatronen fallen im Anschluß daran auf ein Sieb 12 mit Sieböffnungen von vorzugsweise 20 mm, welches an der Austrittsoffnung der Mühle 8 angeordnet ist und auf welchem grobe Partikel verbleiben bis sie weit genug herunter zerkleinert sind und durch welches als Feingut grobzerkleinerte Tintenpatronen-Partikel auf eine erste Vibrations-Siebrinne 14 fallen. Die erste Vibrations-Siebrinne 14 dient dazu, einen Teil der an den Tintenpatronenpartikeln haftenden Tinte abtropfen zu lassen, wobei auf dem Sieb der ersten Vibrations-Siebrinne 14 die zerkleinerten Tintenpatronen als Grobfraktion verbleiben.

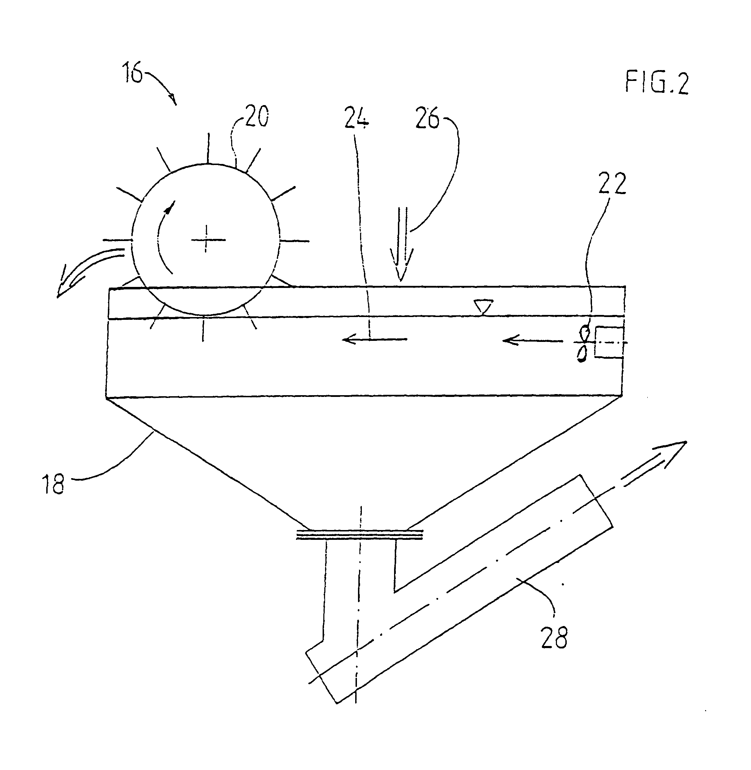

Die Grobfraktion wird in eine in Fig.2 schematisch dargestellte Schwimm-Sink-Trennvorrichtung 16 befördert, welche einen trichterförmigen Trennbehälter 18 aufweist, in welchem als Trennmedium vorzugsweise Wasser gespeichert ist. Die Schwimm-Sink-Trenn-Vorrichtung 16 hat außerdem ein in das Wasser teilweise eingetauchtes und rotatorisch angetriebenes Rechenrad 20 zum Austrag der Schwimmfraktion und motorisch angetriebene Propeller 22 zum Erzeugen einer Oberflächenströmung 24 in Richtung des Rechenrades 20. Wenn nun die grobzerkleinerten Tintenpatronen, welche unter anderem schwimmfähige Kunststoff-Schäume und schwerere Kunststoffpartikel der Tintenpatronen enthalten, an einer Aufgabestelle 26 auf die Wasseroberfläche aufgebracht werden, sinken die schwereren Tintenpatronen-Partikel als Sinkfraktion an den Boden des Trennbehälters 18 ab, wo sie in einen Schneckenförderer 28 zum weiteren Transport gelangen. Während des Absinkens geben die Tintenpatronen-Partikel eine weiteren Teil der an ihnen haftenden Tinte an das Wasser ab, so daß im Trennbehälter 18 neben der Separation auch eine gleichzeitige Reinigung der Tintenpatronen-Partikel stattfindet.

Die durch die Propeller erzeugte Oberflächenströmung 24 ist derart eingestellt, daß die auf der Wasseroberfläche aufschwimmenden Kunststoff-Schaume in kurzer Zeit zum Rechenrad 20 treiben, bevor sie sich mit Wasser vollsaugen und absinken können. Die Oberflächenströmung 24 wird vorzugsweise nur in den oberen Schichten des Trennmediums erzeugt, damit die schwereren Kunststoffpartikel möglichst schnell und ungestört absinken können. Durch das rasche Abströmen der Kunststoff-Schäume in Richtung des Rechenrades 20 wird auch verhindert, daß die Wasseroberfläche mit aufschwimmenden Kunststoff-Schäumen bedeckt ist und nachkommende schwerere Tintenpatronen-Partikel am Absinken gehindert werden. Andererseits darf die Oberflächenströmung 24 nicht zu stark sein, damit die schwerere Sinkfraktion nicht mit abgetrieben wird. Je nach Art des Kunststoff-Schaums kann ein anderes Trennmedium als Wasser verwendet und insbesondere die Dichte und die Strömungsgeschwindigkeit des Trennmediums variiert werden, um ein Vollsaugen und Absinken des Kunststoff-Schaumes zu verhindern. Die auf das rotierende Rechenrad 20 zutreibenden Kunststoff-Schäume werden von den Rechen in einen nicht dargestellten Austragbehälter befördert.

Durch das der Schwimm-Sink-Trennung vorangehende teilweise Abtropfen von Tinte aus den Kunststoff-Schäumen in der ersten Vibrations-Siebrinne 14 wird erreicht, daß die auch Kunststoffschäume, welche in hohem Maße mit Tinte vollgesogen sind, für eine Schwimm-Sink-Trennung mit Wasser als Trennmedium schwimmfähig gemacht werden, da sie andernfalls wegen der höheren Dichte von Tinte gegenüber Wasser absinken würden. Das Vorsehen dieses Schrittes ist daher von Vorteil, wenn sich noch relativ viel Tinte in den Kunststoff-Schäumen befindet.

Von der Schwimm-Sink-Trennvorrichtung 16 werden die abgetrennten Kunststoff-Schäume zu einer Pressvorrichtung 30 transportiert, wo aus den verformbaren Kunststoff-Schäumen die in ihnen aufgesaugte Resttinte und im Laufe der Schwimm-Sink-Trennung eventuell aufgesaugtes Wasser ausgepreßt wird. Im Anschluß werden die ausgepreßten Kunststoff-Schäume verbrannt. Das ausgepreßte Wasser-Tinte-Gemisch wird in den Trennbehälter 18 der Schwimm-Sink-Trennvorrichtung 16 zurückgepumpt, wo es als weitere Waschflüssigkeit für die Sinkfraktion dient.

Die von der Schwimm-Sink-Trennvorrichtung 16 abgetrennte Sinkfraktion wird zu einer zweiten Vibrations-Siebrinne 32 befördert, in welcher die Partikel auf längs der zweiten Vibrations-Siebrinne 32 hintereinander stufenartig angeordneten Siebböden 34 in Schwingung versetzt werden, wodurch ein Teil der an ihnen haftenden Tinte abgeschüttelt wird. Gleichzeitig werden die Tintenpatronen-Partikel auf ihrem Weg entlang der zweiten Vibrations-Siebrinne 32 vom obersten zum untersten Siebboden durch Wasser von Tinte gereinigt, welches aus Waschdüsen 36 strömt, welche oberhalb der Siebböden 34 angeordnet sind. Je nach angestrebter Vollständigkeit der Tintenentfernung wird dabei ein Teil des Wassers im Kreislauf geführt. Schließlich werden die gewaschenen Tintenpatronen-Partikel am untersten und letzten Siebboden durch Luftdüsen 38 abgetrocknet. Ein Teil des Wasser-Tinte-Gemischs, welches unterhalb der zweiten Vibrations-Siebrinne 32 gesammelt wurde, wird durch Pumpen 40 in den Trennbehälter 18 der Schwimm-Sink-Trennvorrichtung 16 zurückgefördert, wo es als weitere Waschflüssigkeit dient.

Die als Grobgut auf dem untersten Siebboden der zweiten Vibrations-Siebrinne 32 liegenden, gewaschenen und abgetrockneten Tintenpatronen-Partikel gelangen über einen ansteigenden Gurtbandförderer 42 zu einem Magnetseparator 44, in welchem ferromagnetische Anteile der Tintenpatronen-Partikel abgetrennt werden. Der Magnetseparator 44 beinhaltet vorzugsweise einen Überbandmagnetscheider 46 in Überkopfanordnung, welcher über dem Abwurfende des Gurtbandförderes 42 angeordnet ist und aus den abgeworfenen Tintenpatronen-Partikeln niedrig legiertes ferromagnetisches Material auf sein Austragsband 48 zieht, von welchem es weitertransportiert wird. Höher legiertes ferromagnetisches Material, welches durch den Überbandmagnetscheider 46 nicht erfaßt worden ist, und nicht-ferro-magnetisches Material wird in einen Trommelmagnetscheider 50 befördert, welcher vorzugsweise einen Neodym-Magneten mit einem stärkeren magnetischen Feld aufweist. Durch die höhere magnetische Kraft des Neodym-Magneten können auch hochlegierte ferromagnetische Partikel von nicht-ferromagnetischen Partikeln abgetrennt werden.

Die durch den Magnetseparator 44 abgetrennten hoch- und niedriglegierten ferromagnetischen Partikel werden einer Siebeinrichtung 52 zugeführt, welche Siebe 54 mit Sieböffnungen von vorzugsweise 5 mm und Siebe 56 mit Sieböffnungen von vorzugsweise 7 mm aufweist. Durch die Siebe 54 mit den Sieböffnungen von 5 mm Durchmesser fallen feinkörnige ferromagnetische Partikel, wie z.B. die Tintendüsen, welche den größten Gold- oder Palladiumanteil auf einer Nickelschicht aufweisen. Partikel mit einer Größe von mehr als 7 mm haben keinen bis einen sehr geringen Edelmetallanteil und bleiben als Grobgut auf den Sieben 56 mit den 7 mm-Sieböffnungen hängen. Partikel mit einer Größe zwischen 5 und 7 mm werden als Zwischenfrak-tion an die Aufgabestelle der Siebmaschine zum nochmaligen Sieben zurückbefördert, da sie in der Regel noch einen Anteil von 10 - 15 % der edelmetallhaltigen ferromagnetischen Partikeln enthalten, welche im Laufe des ersten Siebvorgangs noch nicht ausgesiebt worden sind. Am Ausgang der Sieb- einrichtung 52 werden als Resultat der Siebung feinkörnige edelmetallhaltige und grobkörnige nicht-edelmetallhaltige ferromagnetische Tintenpatronen-Partikel jeweilsgetrennt voneinander in entsprechenden Behältern gespeichert. Es ist klar, daß die Größe der Sieböffnungen vom Fachmann variiert werden kann, um sie je nach Größe und Art der abzutrennenden ferromagnetischen Partikel anzupassen.

Die durch den Magnetseparator 44 abgetrennte nicht-ferromagnetische Fraktion enthält neben Kunststoff-Partikeln auch auf geklebte Trägerfolien mit goldhaltigen Schaltungsbahnen. Diese Fraktion wird in eine Luftwirbelmühle 58 gegeben, in welcher Mahlluft durch einen mit hoher Geschwindigkeit angetriebenen Rotor im Zusammenwirken mit stationären Mahlbahnen in eine energiereiche turbulente Strömung versetzt wird. Die nicht-ferromagnetische Fraktion wird als Mahlgut in den Luftstrom eingegeben und befindet sich während des gesamten Aufenthalts im Zerkleinerungsspalt zwischen dem Rotor und den stationären Mahlbahn. Dabei wird in extrem kurzen Zeitintervallen sowohl die Richtung wie auch die Geschwindigkeit der im Luftstrom schwebenden Partikel geändert, wodurch die Partikel mit hoher Energie zusammenprallen und dadurch auf schonende Weise selektiv zerkleinert und getrocknet werden. Als im Hinblick auf die Verwertung von Wertstoffen in Tintenpatronen besonders vorteilhafter Efffekt werden gleichzeitig durch die bei den Partikel-Kollisionen entstehenden Reib- Prall- und Scherkräfte die Trägerfolien mit den goldhaltigen Schaltungsbahnen von den Platinen abgelöst. Die Luft-Wirbelmühle weist vorzugsweise einen Metalldetektor auf, um zu vermeiden, daß eventuell noch nicht abgetrennte Stahlpartikel die Luft-Wirbelmühle beschädigen. Versuche des Anmelders haben gezeigt, daß durch eine weitere Bearbeitung der feinstzerkleinerten Partikel in einer zweiten kleineren Luft-Wirbelmühle 60 die goldhaltigen Schaltungen von ihrer Trägerfolie abgelöst werden können. Als Resultat der Bearbeitung in den Luft-Wirbelmühlen 58, 60 werden feinstzerkleinerte getrocknete und delaminierte Partikel erhalten welche Kunststoffe und eine weitere Goldfraktion enthalten.

## Patentansprüche

1. Verfahren zur Abtrennung von Wertstoffen aus Stoffgemischen, welche schwimm- und saugfähiges Material und Metalle mit ferromagnetischem Anteil enthalten, insbesondere aus Tintenpatronen, mit folgenden Schritten:
Grobzerkleinern des Stoffgemisches,
Abtrennen des schwimm- und saugfähigen Materials aus der Grobfraktion mittels Schwimm-Sink-Trennung,
Abtrennen der Metalle mit ferromagnetischem Anteil aus der Sinkfraktion mittels Magnetseparation, **dadurch gekennzeichnet,**
**dass**, während der Grobzerkleinerung des Stoffgemisches ein Anti-Schaum-Agens zugeführt wird, und
**dass** nach dem Grobzerkleinern und vor der Schwimm-Sink-Trennung an der Grobfraktion eventuell anhaftende Flüssigkeit vom Schwimm- und saugfähigen Material mittels einer Vibrations-Siebrinne abgetrennt wird.

2. Verfahren nach Anspruch 1, **dadurch gekennzeichnet, dass** das schwimm- und saugfähige Material von einer Aufgabestelle (26) zu einer Ausgabestelle (20) einer Schwimm-Sink-Trennvorrichtung (16) derart schnell befördert wird, dass es im wesentlichen kein flüssiges Trennmedium aufnehmen kann.

3. Verfahren nach Anspruch 2, **dadurch gekennzeichnet, dass** an der Sinkfraktion haftende Flüssigkeit abgewaschen und die abgewaschene Sinkfraktion anschließend getrocknet wird.

4. Verfahren nach einem der vorhergehenden Ansprüche, **dadurch gekennzeichnet, dass** das Stoffgemisch Tintenpatronen beinhaltet und dass die abgetrennten Metalle mit ferromagnetischem Anteil derart gesiebt werden, dass eine edelmetallreiche feinkörnige und eine im wesentlichen edelmetallfreie grobkörnige Stahlfraktion abgetrennt wird.

5. Verfahren nach Anspruch 4, **dadurch gekennzeichnet, dass** die aus der Sinkfraktion abgetrennten Metalle mit ferromagnetischem Anteil derart gesiebt werden, dass eine im wesentlichen edelmetallfreie Stahlfraktion mit Partikelgrößen von mehr als 7mm und eine edelmetallhaltige Stahlfraktion mit Partikelgrößen von weniger als 5mm getrennt voneinander erhalten wird.

6. Verfahren nach eine der vorhergehenden Ansprüche, **dadurch gekennzeichnet, dass** beim verbleibenden nicht-ferromagnetischen Material der Sinkfraktion in einer oder mehreren Luft-Wirbelmühlen (58, 60) gleichzeitig folgende Schritte durchgeführt werden: Zerkleinern, Trocknen und Auflösen von Materialverbunden.

7. Verfahren nach Anspruch 6, **dadurch gekennzeichnet, dass** die Schritte nach Anspruch 6 wiederholt werden.

8. Vorrichtung zur Durchführung des Verfahrens nach einem der Ansprüche 1 bis 7, mit folgenden Merkmalen:
einer Grobzerkleinerungsvorrichtung (8) zum Grobzerkleinern des Stoffgemisches,
einer Schwimm-Sink-Trennvorrichtung (16) zum Trennen des grobzerkleinerten Stoffgemisches in eine Sinkfraktion und in eine schwimm- und saugfähiges Material enthaltende Schwimmfraktion,
einem Magnetseparator (44), durch welchen aus der Sinkfraktion die Metalle mit ferromagnetischem Anteil abtrennbar sind,
**dadurch gekennzeichnet,**
**dass** zwischen der Grobzerkleinerungsvorrichtung (8) und der Schwimm-Sink-Trennvorrichtung (16) eine erste Vibrations-Siebrinne (14) zum Abtropfen von an der Grobfraktion eventuell anhaftenden Flüssigkeit vorgesehen ist, und
**dass** die Grobzerkleinerungsvorrichtung eine Mühle (8) mit einer Einrichtung (10) zur Zufuhr von Anti-Schaum-Agens beinhaltet.

9. Vorrichtung nach Anspruch 8, **dadurch gekennzeichnet, dass** die Schwimm-Sink-Trennvorrichtung (16) ein flüssiges Trennmedium enthält und Mittel (22) zum Transport des auf dem Trennmedium schwimmenden schwimm- und saugfähigen Materials von einer Aufgabestelle (26) zu einer Ausgabestelle (20) aufweist, welche das schwimm- und saugfähige Material entlang der Oberfläche des Trennmediums derart schnell befördern, dass es im wesentlichen kein flüssiges Trennmedium aufnehmen kann.

10. Vorrichtung nach Anspruch 8 oder 9, **dadurch gekennzeichnet, dass** eine zweite Vibrations-Siebrinne (32) mit Waschdüsen (36) zum Abwaschen von Flüssigkeit von der Sinkfraktion und mit Luftdüsen (38) zum anschließenden Trocknen der gewaschenen Sinkfraktion vorgesehen ist.

11. Vorrichtung nach einem der Ansprüche 8 bis 10, **dadurch gekennzeichnet, dass** das Stoffgemisch Tintenpatronen beinhaltet und eine Siebeinrichtung (52) zum Sieben der abgetrennten Metalle mit ferromagnetischem Anteil vorgesehen ist, um eine edelmetallreiche feinkörnige und eine im wesentlichen edelmetallfreie grobkörnige Stahlfraktion zu erhalten.

12. Vorrichtung nach Anspruch 11, **dadurch gekennzeichnet, da**ß die Siebeinrichtung (52) Siebe (54) mit Sieböffnungen von vorzugsweise 5 mm und Siebe (56) mit Sieboffnungen von vorzugsweise 7 mm aufweist, um eine im wesentlichen edelmetallfreie Stahlfraktion mit Partikelgrößen von mehr als 7mm und eine edelmetallhaltige Stahlfraktion mit Partikelgrößen von weniger als 5 mm getrennt voneinander zu erhalten.

13. Vorrichtung nach einem der Ansprüche 8 bis 12, **dadurch gekennzeichnet, daß** sie mindestens eine Luft-Wirbelmühle (58, 60) zur mindestens einmaligen Bearbeitung von nicht-ferromagnetischem Material aufweist, um es gleichzeitig zu Zerkleinern, zu Trocknen und um Materialverbunde aufzulösen.

## Claims

1. Method of separating off valuable materials from mixtures of substances containing floatable and absorbent material and metals having ferromagnetic fractions, in particular from ink cartridges, the method comprising:
crushing the mixture of substances,
separating off the floatable and absorbent material from the coarse fraction by means of sink-float separation,
separating off the metals having a ferromagnetic fraction from the sinking fraction by means of magnet separation, **characterized in that**
an antifoaming agent is added during the crushing of the mixture of substances, and
after crushing and prior to the sink-float separation, any liquid from the floatable and absorbent material that may adhere to the coarse fraction is separated off by means of a vibration screening groove.

2. Method as claimed in claim 1, **characterized in that** the floatable and absorbent material is conveyed from a point of charge (26) to a point of output (20) of a sink-float separating device (16) at such a rate that it essentially cannot absorb any liquid separating medium.

3. Method as claimed in claim 2, **characterized in that** any liquid adhering to the sinking fraction is washed off, and that the sinking fraction washed is subsequently dried.

4. Method as claimed in any one of the previous claims, **characterized in that** the mixture of substances incorporates ink cartridges and that the metals with ferromagnetic fractions which have been separated off are screened such that steel fractions which are, respectively, fine-grained and rich in precious metals, and coarse-grained and free from precious metals, are essentially separated off.

5. Method as claimed in claim 4, **characterized in that** the metals with ferromagnetic fractions which have been separated off from the sinking fraction are screened such that a steel fraction essentially free from precious metals and having particle sizes of more than 7 mm, and a steel fraction containing precious metals and having particle sizes of less than 5 mm are obtained separately from each other.

6. Method as claimed in any one of the previous claims, **characterized in that** the following steps are simultaneously performed on the remaining non-ferromagnetic material of the sinking fraction in one or more air whirl mills (58, 60): grinding, drying and breaking up compound materials.

7. Method as claimed in claim 6, **characterized in that** the steps as claimed in claim 6 are repeated.

8. Apparatus for performing the method as claimed in any one of claims 1 to 7, the apparatus comprising:
a crushing device (8) for crushing the mixture of substances,
a sink-float separating device (16) for separating the crushed mixture of substances into a sinking fraction and a floating fraction containing floating and absorbent material,
a magnet separator (44) by means of which the metals with a ferromagnetic fraction may be separated off from the sinking fraction,
**characterized in that**
a first vibration screening groove (14) for draining any liquid that may adhere to the coarse fraction is provided between the crushing device (8) and the sink-float separating device (16), and
the crushing device includes a mill (8) having means (10) for adding an antifoaming agent.

9. Apparatus as claimed in claim 8, **characterized in that** the sink-float separating device (16) contains a liquid separating medium and means (22) for transporting the floatable and absorbent material, which floats on the separating medium, from a point of charge (26) to a point of output (20), which means convey the floatable and absorbent material along the surface of the separating medium at such a rate that it essentially cannot absorb any liquid separating medium.

10. Apparatus as claimed in claim 8 or 9, **characterized in that** a second vibration screening groove (32) is provided which comprises washing nozzles (36) for washing off liquid from the sinking fraction, and air nozzles (38) for subsequent drying of the washed sinking fraction.

11. Apparatus as claimed in any one of claims 8 to 10, **characterized in that** the mixture of substances includes ink cartridges, and that screening means (52) for screening the metals with ferromagnetic portions which have been separated off is provided to obtain a fine-grained steel fraction rich in precious metals and a coarse-grained steel fraction essentially free from precious metals.

12. Method as claimed in claim 11, **characterized in that** the screening means (52) comprise screens (54) having screen openings of preferably 5 mm, and screens (56) having screen openings of preferably 7 mm to obtain, separately from each other, a steel fraction essentially free from precious metals and having particle sizes of more than 7 mm, and a steel fraction containing precious metals and having particle sizes of less than 5 mm.

13. Apparatus as claimed in any one of claims 8 to 12, **characterized in that** it comprises at least one air whirl mill (58, 60) for processing non-ferromagnetic material at least once so as to grind and dry it and to break up compound materials simultaneously.

## Revendications

1. Procédé pour séparer des matières de valeur de mélanges, qui contiennent une matière flottable et absorbante et des métaux avec une proportion ferromagnétique, en particulier de cartouches d'encre, présentant les étapes suivantes :
- concassage du mélange,
- séparation des matières flottables et absorbantes à partir de la fraction grossière à l'aide d'une séparation flottation-dépôt,
- séparation des métaux avec la proportion ferromagnétique à partir de la fraction déposée à l'aide d'une séparation magnétique, **caractérisé en ce que**
pendant le concassage du mélange, on ajoute un agent anti-mousse, et
qu'après le concassage et avant la séparation flottation-dépôt, on sépare le liquide adhérant éventuellement sur la fraction grossière des matières flottables et absorbantes à l'aide d'un canal de tamisage à vibration.

2. Procédé selon la revendication 1, **caractérisé en ce que** les matières flottables et absorbantes sont accélérées depuis un site d'introduction (26) jusqu'à un site de prélèvement (20) d'un dispositif de séparation flottation-dépôt (16), assez vite pour que l'on ne puisse essentiellement pas recueillir de milieu de séparation liquide.

3. Procédé selon la revendication 2, **caractérisé en ce que** le liquide adhérent sur la fraction déposée est lavé et la fraction déposée lavée est ensuite séchée.

4. Procédé selon l'une quelconque des revendications précédentes, **caractérisé en ce que** le mélange contient des cartouches d'encre et que les métaux avec proportion ferromagnétique séparés sont tamisés de sorte que l'on sépare une fraction d'acier à grains fins, riche en métaux nobles et une fraction d'acier à gros grains, essentiellement exempte de métaux nobles.

5. Procédé selon la revendication 4, **caractérisé en ce que** les métaux avec proportion ferromagnétique séparés de la fraction déposée sont tamisés de sorte que l'on obtienne une fraction d'acier essentiellement exempte de métaux nobles, avec une granulométrie de plus de 7 mm et une fraction d'acier contenant des métaux nobles, avec une granulométrie inférieure à 5 mm.

6. Procédé selon l'une quelconque des revendications précédentes, **caractérisé en ce que** lorsqu'il reste une matière non ferromagnétique de la fraction déposée, on réalise simultanément les étapes suivantes dans un ou plusieurs moulins à tourbillon d'air (58, 60) : broyage, séchage et désagrégation des matières liées.

7. Procédé selon la revendication 6, **caractérisé en ce que** l'on répète l'étape de la revendication 6.

8. Dispositif pour réaliser le procédé selon l'une quelconque des revendications 1 à 7, ayant les caractéristiques suivantes :
- un dispositif de concassage (8) pour le concassage du mélange,
- un dispositif de séparation flottation-dépôt (16) pour la séparation du mélange concassé en une fraction déposée et en une fraction flottée contenant la matière flottable et absorbante,
- un séparateur magnétique (44), par lequel on sépare les métaux avec proportion ferromagnétique de la fraction déposée,
**caractérisé en ce que**
entre le dispositif de concassage (8) et le dispositif de séparation flottation-dépôt (16), est prévu un premier canal de tamisage par vibration (14) pour l'égouttage du liquide adhérant éventuellement sur la fraction grossière, et
le dispositif de concassage contient un moulin (8) avec un montage (10) pour l'amenée de l'agent anti-mousse.

9. Dispositif selon la revendication 8, **caractérisé en ce que** le dispositif de séparation flottation-dépôt (16) contient un milieu de séparation liquide et présente un moyen (22) pour le transport des matières flottables et absorbantes flottant sur le milieu de séparation, d'un site d'introduction (26) à un site de prélèvement (20), qui accélère les matières flottables et absorbantes le long de la surface du milieu de séparation assez vite pour que l'on ne puisse essentiellement pas recueillir de milieu de séparation liquide.

10. Dispositif selon la revendication 8 ou 9, **caractérisé en ce que** l'on prévoit un deuxième canal de tamisage par vibration (32) avec buses de lavage pour le lavage du liquide de la fraction déposée et avec des buses d'air (38) pour ensuite sécher la fraction déposée lavée.

11. Dispositif selon l'une quelconque des revendications 8 à 10, **caractérisé en ce que** le mélange contient des cartouches d'encre et est muni d'un dispositif de tamisage (52) pour tamiser les métaux avec proportion ferromagnétique séparés, pour obtenir une fraction d'acier à grains fins, riche en métaux nobles et une fraction d'acier à gros grains, essentiellement exempte de métaux nobles.

12. Dispositif selon la revendication 11, **caractérisé en ce que** le dispositif de tamisage (52) présente un tamis (54) avec orifices de tamisage de 5 mm, de préférence et un tamis (56) avec orifices de tamisage de 7 mm, de préférence, pour obtenir une fraction d'acier essentiellement exempte de métaux nobles, avec une granulométrie de plus de 7 mm et une fraction d'acier contenant des métaux nobles, avec une granulométrie inférieure à 5 mm.

13. Dispositif selon l'une quelconque des revendications 8 à 12, **caractérisé en ce qu'**il présente au moins un moulin à tourbillon d'air (58, 60) pour traiter au moins une fois la matière non ferromagnétique, pour simultanément broyer, sécher et désagréger les matières liées.
